**Europäisches Patentamt**

**European Patent Office**

**Office européen des brevets**

(11) Veröffentlichungsnummer: **0 275 514 B1**

(12) **EUROPÄISCHE PATENTSCHRIFT**

(45) Veröffentlichungstag der Patentschrift: **08.04.92**

(51) Int. Cl.⁵: **C10B 5/02**, C10B 5/10

(21) Anmeldenummer: **87118829.8**

(22) Anmeldetag: **18.12.87**

Verbunden mit 88900879.3/0338021 (europäische Anmeldenummer/Veröffentlichungsnummer) durch Entscheidung vom 01.03.91.

(54) **Verkokungsreaktor.**

(30) Priorität: **22.12.86 DE 3643916**
**22.12.86 DE 3643917**
**22.12.86 DE 3643918**
**22.12.86 DE 3643919**

(43) Veröffentlichungstag der Anmeldung:
**27.07.88 Patentblatt 88/30**

(45) Bekanntmachung des Hinweises auf die Patenterteilung:
**08.04.92 Patentblatt 92/15**

(84) Benannte Vertragsstaaten:
**AT BE DE ES FR GB IT LU NL SE**

(56) Entgegenhaltungen:
**DE-B- 2 359 667**
**DE-C- 243 415**
**DE-C- 261 360**
**DE-C- 406 734**

(73) Patentinhaber: **Bergwerksverband GmbH**
**Franz-Fischer-Weg 61**
**W-4300 Essen 13(DE)**

(72) Erfinder: **Nashan, Gerd, Dr.**
**Hirschkampstrasse 24**

**W-4200 Oberhausen 11(DE)**
Erfinder: **Wessiepe, Klaus, Dr.-Ing.**
**Schliepersberg 33a**
**W-4300 Essen 15(DE)**
Erfinder: **Bertling, Heribert, Dr.**
**Wolfskuhle 40**
**W-4320 Hattingen 16(DE)**
Erfinder: **Rohde, Wolfgang, Dr.-Ing.**
**Lindkenshoferweg 72**
**W-4300 Essen 14(DE)**
Erfinder: **Blase, Manfred, Dipl.-Ing.**
**Propsteistrasse 62**
**W-4300 Essen 16(DE)**
Erfinder: **Galow, Manfred**
**Vosselerweg 2**
**W-4300 Essen 12(DE)**
Erfinder: **Kochanski, Ulrich, Dipl.-Ing.**
**Hustadtring 59**
**W-4630 Bochum(DE)**
Erfinder: **Dürselen, Heinz, Dipl.-Ing.**
**Laubrockweg 5**
**W-4300 Essen 14(DE)**
Erfinder: **Janicka, Johannes, Dr.**
**Mergelstrasse 5**
**W-4200 Oberhausen 12(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

Erfinder: **Stalherm, Dieter, Dr.**
**Doriderweg 18**
**W-4352 Herten 3(DE)**
Erfinder: **Hoitz, Joachim, Dr.**
**Brixener Strasse 18**
**W-4352 Herten 3(DE)**
Erfinder: **Tietze, Jürgen, Dr.**
**Saladin-Schmitt-Strasse 30**
**W-4630 Bochum 1(DE)**
Erfinder: **Schumacher, Ralf**
**Am Lilienbaum 29**
**W-5800 Hagen(DE)**

## Beschreibung

Die Erfindung betrifft einen Verkokungsreaktor, dem Einsatzmischungen, vorzugsweise auf Basis von Steinkohle, chargenweise aufgegeben werden, wobei der Reaktor durch regelbare Beheizungseinrichtungen über beiderseits die Reaktorkammer begrenzende Heizwände indirekt mit Wärmerückgewinnung in Regeneratoren oder Rekuperatoren beheizt wird.

Die Erfindung betrifft außerdem eine Anlage, bei der mehrere Reaktoren zu Blöcken zusammengefaßt sind.

Die Kammern zur Verkokung von Steinkohle werden üblicherweise in einer Batteriebauweise erstellt, bei der Kammern und Heizwände im Wechsel nebeneinander angeordnet sind. Hierbei liegt also jeweils eine Heizwand zwischen zwei Kammern.

Für den Betrieb einer Koksofenbatterie wird ein bestimmter Druck- und Füllrhythmus eingehalten, beispielsweise der 5/2-Turnus, der besagt, daß die Koksöfen mit den Nummern 1, 6, 11, 16 usw. ... 3, 8, 13, 18 usw. ... 5, 10, 15, 20 usw. ... 2, 7, 12, 17 usw. ... 4, 9, 14, 19 usw. leer ausgedrückt und gefüllt werden; vielfach ist auch der 2/1-Turnus gebräuchlich, bei dem analog die Koksöfen Nr. 1, 3, 5, 7 usw. ... 2, 4, 6, 8 usw. nacheinander bedient werden. Gewollte Konsequenz dieser Druckrhythmen ist der ungleiche Abgarungszustand benachbarter Koksofenchargen: Auf diese Weise wird verhindert, daß die Treibdruckspitze einer Ofencharge gerade dann auftritt, wenn die benachbarte Kammer entleert oder der Besatz schon weitgehend abgegart und geschrumpft ist und kein Widerlager gegen den Treibdruck mehr bieten kann. Eine weitere Konsequenz ist aber auch, daß die Wärmezufuhr dem jeweiligen Bedarf des Kammerbesatzes nicht angepaßt werden kann; dies ist sehr nachteilig, da der Wärmebedarf einer Charge zum Ende der Abgarung sehr gering wird, so daß die Wärmezufuhr reduziert werden könnte. Bei der bekannten Bau- und Betriebsweise von Koksofenbatterien muß daher zwangsläufig ein höherer Wärmebedarf in Kauf genommen werden.

Auf der anderen Seite zwingt aber die geringe Stabilität der Heizwände dazu, einen bestimmten ausgeklügelten Druckrhythmus sorgfältig einzuhalten, um betriebliche Risiken durch treibende Koksofenchargen in Grenzen zu halten. Dennoch kommt es in den Kokereien immer wieder vor, daß Koksofenwände durch Einsatz treibgefährlicher Kohle deformiert bzw. zerstört werden. Daher wird in den Kokereibetrieben sorgsam darauf geachtet, daß der Anteil treibender Kohlen in einer Mehrkomponenten-Einsatzmischung nicht zu hoch wird.

Ein weiterer Nachteil der konventionellen Bauweise von Koksofenbatterien besteht darin, daß viele thermisch hoch beanspruchte Dichtelemente vorhanden sind, die sich häufig verziehen und dadurch ihre Dichtungsfunktion einbüßen; Emissionen an diesen Dichtsystemen sind dann die Folge.

Ein weiterer Nachteil dieser Bauweise ist darin zu sehen, daß nur die gesamte Batterie ersetzt werden kann. Eine Erneuerung von Batterieteilen, bei der gleichzeitig fortschrittliche Techniken angewendet werden können, ist hierbei im allgemeinen mit einem vertretbaren Aufwand nicht realisierbar.

Der Erfindung liegt die Aufgabe zugrunde, einen Verkokungsreaktor der gattungsgemäßen Art vorzuschlagen, der eine Vermeidung der Wandschäden durch zu hohe Treibdrücke, eine Senkung des Energieverbrauchs und der Emissionen, eine Unabhängigkeit der Einsatzmischungen von der Rohstoffbasis sowie eine verbesserte Steuerung und Regelung ermöglicht. Der Erfindung liegt weiterhin die Aufgabe zugrunde, geeignete Reaktoren vorzuschlagen, die statisch und beheizungstechnisch unabhängig betreibbar sind, sowie Anlagen, bei denen mehrere Reaktoren zu Blöcken zusammengefaßt sind, die mit fortschrittlichen Bautechniken errichtet und in einfacher Weise teilerneuert werden können.

Diese Aufgabe wird hinsichtlich des Verkokungsreaktors der eingangs genannten Gattung dadurch gelöst, daß

a) der Reaktor als Großraumverkokungsreaktor mit einer Reaktorkammer (1), Heizwänden (3) und Beheizungseinrichtungen (10, 19, R, I, II) ausgebildet ist, wobei die Reaktorkammer (1) eine Breite von mindestens 0,7 m und eine Nutzhöhe von mindestens 0,5 m sowie eine Nutzlänge von mindestens 18 m aufweist;

b) die die Reaktorkammer (1) begrenzenden Heizwände (3) planparallel angeordnet sind;

c) die Reaktorkammer (1) mit ihren Heizwänden (3) zwischen mindestens zwei starren Seitenwänden (2) angeordnet ist, wobei die Heizwände (3) starr gegen die Seitenwände (2) abgestützt sind;

d) jede der Heizwände (3) eine der Reaktorkammer (1) zugekehrte Läuferwand (11) und eine der starren Seitenwand (2) zugekehrte Trennwand (12) sowie dazwischen senkrecht angeordnete Heizzüge aufweist; und

e) den beiden Heizwänden (3) alle Einrichtungen (10, R, I, II) sowie den Heizzügen separate Steuer- und/oder Regelelementen (19) zur eigenständigen Beheizung der Reaktorkammer (1) zugeordnet sind.

Bei dem erfindungsgemäßen Verkokungsreaktor werden Großraumverkokungsreaktoren verwendet, wodurch ein Rationalisierungspotential erschlossen wird, das beträchtliche Produktivitätssteigerungen (t Koks je Druckvorgang) und Leistungssteigerungen (t Koks/m². h) ermöglicht, ohne daß sich der Investitionsbedarf insgesamt erhöht. Da die konstruktions- und betriebsbedingten Kräfte von starren Seitenwänden aufgenommen werden, können nämlich außerordentlich große Reaktordimensionen verwirklicht werden.

Durch die Vergrößerung der Reaktorkammer ist der Aufwand für Regelung und Steuerung sehr niedrig. Da weniger Dichtflächen, bezogen auf die Produktionsmenge, vorhanden sind, werden die Emissionen beträchtlich reduziert. Außerdem verringert sich die Anzahl der Druckvorgänge.

Mit dem erfindungsgemäßen Verkokungsreaktor können alle Kohlenarten, auch vorerhitzte, problemlos verkokt werden. Treibschäden werden gänzlich vermieden, weil die starren Seitenwände ein Auslenken der Heizwände verhindern. Das bisherige, nachteilige nachgiebige System wird durch ein vorteilhafteres starres System abgelöst, das wesentlich höheren Verkokungsdrücken widersteht. Dadurch wird die Kokserzeugung aus einer sehr breiten Kokskohlenpalette möglich, insbesondere aus den etwas höher inkohlten treibgefährlichen Fettkohlen bzw. oberen Eßkohlen. Bei diesem starren System dient die Reaktordecke nur zur Isolation und kann daher sehr leicht ausgeführt werden. Sie muß nicht, wie bei dem bisherigen nachgiebigen System, eine Haltekraft in senkrechter Richtung auf die Heizwände ausüben.

Die planparallele Ausgestaltung der Heizwände führt zu einer erheblichen Vereinfachung der Bausteinformate sowie zu einer Verringerung des Aufwandes beim Aufmauern. Zugleich kann im Gegensatz zu den bisher üblichen Konstruktionen über der gesamten Länge der Reaktorkammer eine gleichmäßige Wärmemenge zugeführt werden, und die bekannten Probleme bei der Verteilung der in Kammerlängsrichtung zuzuführenden Gasmengen für die Unterfeuerung treten nicht mehr auf.

Überraschenderweise hat sich gezeigt, daß sich bei breiteren Kammern die Kammerfüllung aufgrund der Schrumpfung hinreichend weit von den Kammerwänden absetzt, so daß es keine Schwierigkeiten beim Ausdrücken des Kokses gibt. Außerdem können von den Heizwänden nunmehr auch Reibungskräfte aufgenommen werden.

Die planparallele Ausführung hat weiterhin den Vorteil, daß über die gesamte Kammerlänge die Beheizung auf eine einheitliche, maximale Steintemperatur eingestellt werden kann, um kurze Verkokungszeiten zu erreichen.

Bei dem erfindungsgemäßen Verkokungsreaktor wird der Reaktorkammer gezielt die dem jeweiligen Garungszustand der Kammerfüllung angepaßte Wärmemenge zugeführt und somit der Energieverbrauch reduziert. Gleichzeitig wird die Kammerfüllung an allen Stellen gleichmäßig und vollständig verkokt, ohne daß es zu unerwünschten Überhitzungen kommt. Durch die Vermeidung von zu hohen Temperaturen wird hierbei auch die Bildung von $NO_x$ im Verbrennungsabgas in den vorgeschriebenen Grenzen gehalten.

Die Verbrennungsmedien werden für jeden einzelnen Heizzug in getrennten Regeneratoreinheiten oder Rekuperatoreinheiten vorgewärmt bzw. abgekühlt und die Mengenströme jeweils individuell gesteuert. Durch diese Maßnahme ist es möglich, die Wärmezufuhr über die Länge der Reaktorkammer dem örtlichen Bedarf der Kammerfüllung anzupassen.

Zweckmäßig weist der erfindungsgemäße Großraumverkokungsreaktor eine Nutzhöhe von mindestens 8,5 m und eine Nutzlänge von mindestens 18 m sowie eine Breite der Reaktorkammer von mindestens 0,7 m auf. Dies entspricht einem Reaktornutzvolumen von 107 m³ und einer Kokserzeugung von 71 t. Machbarkeitsstudien hatten zum Ergebnis, daß eine Reaktornutzhöhe von 12 m, eine Reaktornutzlänge von 25 m sowie eine Kammerbreite von 0,85 m noch möglich sind, was einem Reaktornutzvolumen von 255 m³ und somit einer Kokserzeugung von 165 t entspricht. Die bisher bekanntgewordenen herkömmlichen Kammern haben maximal ein Nutzvolumen von 70 m³, entsprechend einer Kokserzeugung von 45 t.

Bei einer vorteilhaften Ausgestaltung des erfindungsgemäßen Großraumverkokungsreaktors sind die Regeneratoren oder Rekuperatoren zwischen den Heizwänden und den starren Seitenwänden angeordnet. Durch diese Ausführung ist eine relativ niedrige Gesamtbauhöhe möglich.

Die starren Seitenwände werden zweckmäßig im Deckenbereich starr miteinander verbunden. Dies wird vorteilhaft durch die Anordnung von Abstandselementen und Längsankern zwischen den starren Seitenwänden verwirklicht. Diese Abstandselemente können z. B. Deckenelemente sein.

Die starren Seitenwände des Großraumverkokungsreaktors werden vorteilhaft mit Spannankern versehen, die zweckmäßig gekühlt werden durch zwangsweise Zuführung eines Kühlmediums.

Bei dem erfindungsgemäßen Großraumverkokungsreaktor kann die Dicke der Läuferwand auf bis zu 50 mm verringert werden, da gemäß der Erfindung die statischen Funktionen auf die starren Seitenwände übertragen bzw. von diesen übernommen werden, während die Heizwände der Reaktorkammern lediglich wärmetechnische Funktionen übernehmen, so daß sie alleine nach wärmetechnischen Gesichtspunkten ausgelegt werden und entsprechend leicht gebaut sein können. Damit wird die Wärmeübertragung auf die in der von den Heizwänden begrenzten Reaktorkammern befindliche Kohle verbessert. Es wird also nicht nur der konstruktive Aufbau des Reaktors mit großen Kammervolumen vereinfacht, sondern auch noch die Betriebsweise wesentlich verbessert. Durch die Verringerung der Läuferwanddicke ist außerdem eine weitere Verminderung der $NO_x$-Bildung aufgrund der Erniedrigung der Heizzugtemperatur möglich, ohne daß eine Verlängerung der Garungsdauer erforderlich ist.

Die die konstruktions- und betriebsbedingten Kräfte des Großraumverkokungsreaktors aufnehmenden starren Seitenwände sind vorzugsweise formschlüssig mit einer Grundplatte verbunden. Dadurch wird sichergestellt, daß die Fußpunkte der starren Seitenwände festliegen.

Zur Übertragung der Kräfte von der Reaktorkammer auf die starren Seitenwände des Großraumverkokungsreaktors schließen sich an die Binderwände zweckmäßig Querwände an, zwischen denen die Regeneratoren oder Rekuperatoren in Kammerlängsrichtung angeordnet sind.

Gemäß einer Weiterbildung der Erfindung können zwischen starrer Seitenwand und Heizwand des Großraumverkokungsreaktors zwei Regeneratoren mit in entgegengesetzter Richtung strömenden Medien angeordnet sein, die durch eine in Kammerlängsrichtung verlaufende Längswand voneinander getrennt sind und über eine obere oder untere Umkehrstelle miteinander in Verbindung stehen.

Statt des einen Regenerators in der Nähe der starren Seitenwand des Großraumverkokungsreaktors kann ein senkrechter Kanal ohne Wärmeaustauschmaterial angeordnet sein, um die thermische Belastung der starren Seitenwand weiter zu verringern.

Dabei kann, um die Reaktorbreite zu verringern, in einer besonderen Ausführungsform der Erfindung die Isolierschicht zwischen Regenerator und der Heizwand des Großraumverkokungsreaktors im kalten Bereich (oben) des Regenerators dicker bzw. weniger wärmeleitend sein als im warmen Bereich (unten) und die Isolierschicht zwischen dem Kanal und dem Regenerator im warmen Bereich (unten) dicker bzw. weniger wärmeleitend sein als im kalten Bereich (oben) des Regenerators.

Der konstruktive und bautechnische Aufwand zur Errichtung bzw. Wiederherstellung eines Großraumverkokungsreaktors wird noch weiter verringert, wenn dieser und/oder dessen Teile und/oder die starren Seitenwände und/oder Teile der starren Seitenwände aus großformatigen oder vorgefertigten großvolumigen Teilen, vorzugsweise Feuerfestbetonteilen bestehen. Die vorzugsweise aus Beton, z. B. Feuerfestbeton, gegossenen starren Seitenwände können gekühlte Armierungen, z. B. Spannanker, aufweisen, um den Beeinträchtigungen der hohen Temperaturen und des periodischen Temperaturwechsels entgegenzuwirken.

Die Heizzüge der Heizwände können nach Art des Zwillingszug-, Vierzug- oder halbgeteilten Beheizungssystems ausgebildet werden, wobei jeder der beiden Heizwände einer Reaktorkammer eigene, getrennt beaufschlagbare Regeneratoren für Luft, Schwachgas und Abhitze zugeordnet sind. Dies ermöglicht eine vollkommen unabhängige Beheizung des Kammerbesatzes von beiden Kammerwänden her.

In einzelnen Fällen kann es vorteilhaft sein, wenn der Wärmerückgewinnungsteil eines Großraumverkokungsreaktors in Form von Regeneratoren oder Rekuperatoren unterhalb der Heizwände und/oder der Reaktorkammer angeordnet ist. Dadurch benötigt der Reaktor eine kleinere Grundfläche.

Gemäß einer weiteren vorteilhaften Ausgestaltung der Erfindung werden Anlagen vorgeschlagen, bei denen mehrere Großraumverkokungsreaktoren zu einem Reaktorblock zusammengefaßt sind, wobei diese Großraumverkokungsreaktoren als Module ausgeführt sind und unabhängig von Nachbarmodulen betreibbar und ggfs. auswechselbar sind. Die einzelnen Großraumverkokungsreaktoren sind untereinander gleiche, im wesentlichen aus Reaktorkammer, Heizwänden, Wärmerückgewinnungsteil und Reaktordecke bestehende Baueinheiten (Module), die oder deren Teile ohne Produktionsausfall des Reaktorblockes ausgewechselt und erforderlichenfalls repariert werden können.

Der Betrieb eines Reaktorblockes kann darüber hinaus hinsichtlich seiner Betriebsweise flexibel gestaltet und an geänderte Marktgegebenheiten angeglichen werden, da jeder Großraumverkokungsreaktor in wärmetechnischer, bautechnischer und statischer Hinsicht eine von den anderen Reaktoren unabhängige Einheit ist. Durch die Zusammenfassung zu Reaktorblöcken bleiben jedoch die Vorteile der früheren Batteriebauweise hinsichtlich der Bedienung erhalten.

Damit wird ein völlig neues Konzept vorgeschlagen, welches den Bau von Großraumverkokungsreaktoren mit über die bisher üblichen Kammerhöhen, Kammerlängen und Kammerbreiten hinausgehenden Nutzmaßen zuläßt. Da die Heizwände beheizungstechnisch unabhängig voneinander ausgebildet sind, lassen sich die einzelnen Großraumverkokungsreaktoren der Reaktorblöcke beispielsweise durch eine Programmsteuerung völlig unabhängig voneinander betreiben, was bei der bisherigen Batteriebauweise wegen der konstruktiven- und beheizungstechnischen Kopplung benachbarter Kammern nicht möglich war.

Ein weiteres vorteilhaftes Merkmal der Blockbauweise besteht darin, daß jeweils nur eine starre Seitenwand zwischen zwei benachbarten Großraumverkokungsreaktoren angeordnet ist.

Im Gegensatz zu den zwischen den starren Seitenwänden vorgeschlagenen Einzelverankerungen können auch Längsanker, die vorzugsweise auf der Reaktordecke über die gesamte Länge des Reaktorblockes reichen, verwendet werden. In Verbindung mit den einzelnen Abstandselementen ergibt sich dadurch eine Vereinfachung in der Längsverankerung des Reaktorblockes.

Mit der Erfindung wird daher insgesamt ein Reaktorblock vorgeschlagen, welcher große Kammervolumina bei einfachem Aufbau und einfacher Reparaturmöglichkeit sowie eine wirtschaftliche, programmierbare und selbständige Betriebsweise der einzelnen Großraumverkokungsreaktoren in sich vereinigt.

In der Reaktordecke können eine oder mehrere längliche Öffnungen angeordnet sein. Durch die länglichen Öffnungen kann sowohl das Chargieren als auch das Einebnen des Besatzes vorgenommen werden. Vorteilhaft können sekundäre Eintragsysteme, z. B. in die Reaktorkammer absenkbare Teleskoprohre, eingesetzt werden.

Die Erfindung wird nachfolgend anhand der Zeichnung näher beschrieben:

Die Zeichnung zeigt in der

Fig. 1     einen Vertikalschnitt durch einen Großraumverkokungsreaktor, bei dem die Regeneratoren zwischen den Heizwänden und den starren Seitenwänden angeordnet sind, und in

Fig. 2     einen waagerechten Teilschnitt nach der Linie X-X von Fig. 1.

Fig. 3     zeigt einen entsprechenden Vertikalschnitt einer anderen Ausführungsform des Gegenstandes der Fig. 1 mit einem in der Nähe der starren Seitenwand angeordneten senkrechten Kanal.

Fig. 4     zeigt eine Weiterbildung des Gegenstandes der Fig. 3, bei der die Isolierschichten unterschiedlich dick ausgebildet sind.

Fig. 5     zeigt einen Großraumverkokungsreaktor im Vertikalschnitt, bei dem die Regeneratoren unterhalb der Heizwände und der Reaktorkammer angeordnet sind.

Fig. 6     stellt im Vertikalschnitt einen aus Großraumverkokungsreaktoren mit zwischen den Heizwänden und den starren Seitenwänden angeordneten Regeneratoren bestehenden Reaktorblock dar.

Fig. 7     stellt einen aus Großraumverkokungsreaktoren bestehenden Reaktorblock ähnlich Fig. 6 dar, bei dem nur jeweils eine starre Seitenwand zwischen zwei benachbarten Großraumverkokungsreaktoren angeordnet ist.

Fig. 8     stellt einen Reaktorblock ähnlich Fig. 6 dar, bei dem die Regeneratoren unterhalb der Heizwände angeordnet sind.

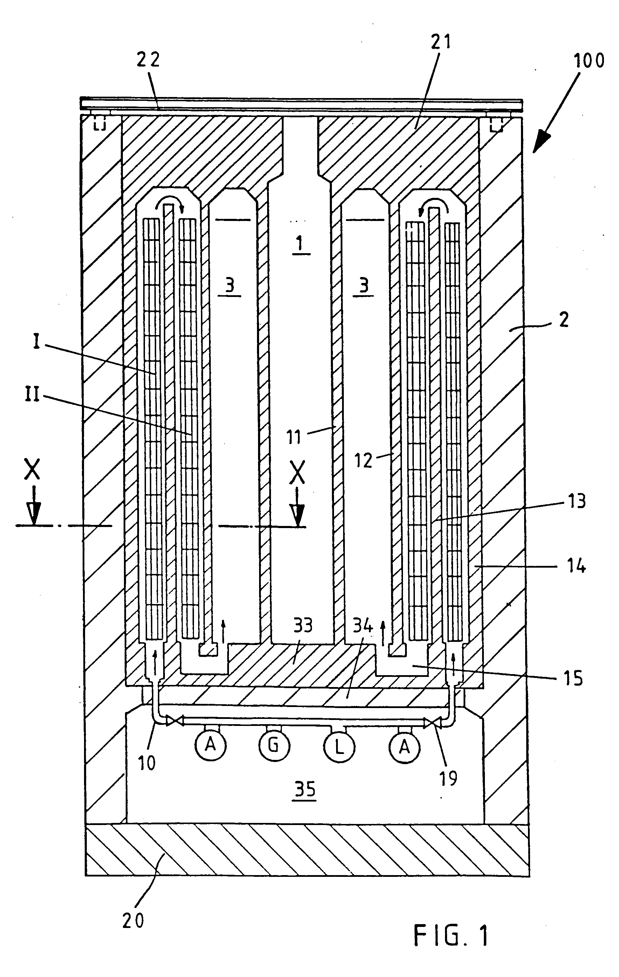

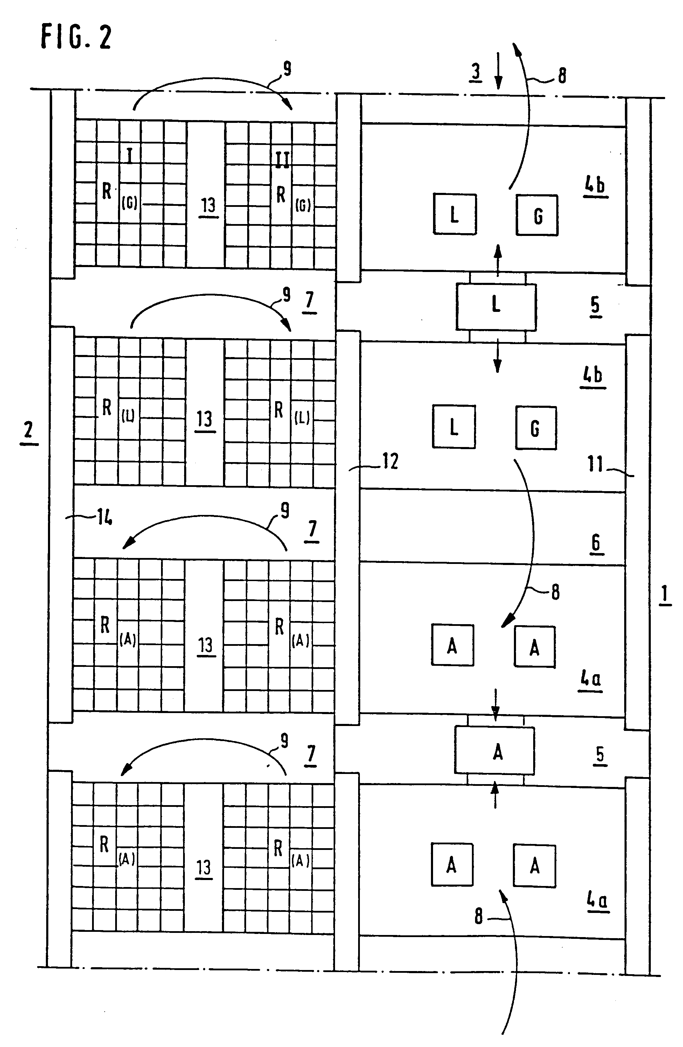

In Figur 1 ist ein Großraumverkokungsreaktor 100 in einem Vertikalschnitt dargestellt. Er besteht aus einer Reaktorkammer 1, Heizwänden 3 mit einer Läuferwand 11 und einer Trennwand 12, Regeneratoren I und II, getrennt durch eine Längswand 13, Wänden mit Isolierschicht 14, einer Reaktordecke 21 und einem Reaktorboden 33. Diese Elemente sind zwischen zwei starren Seitenwänden 2 angeordnet, die unten über eine Grundplatte 20 und oben über Abstandselemente 22 miteinander verbunden sind. Die Reaktorkammer 1 ist in üblicher Weise an ihrer Vor derseite und an ihrer Rückseite mit abnehmbaren Reaktortüren (hier nicht dargestellt) versehen. Unterhalb des Reaktorbodens 33 ist ein Abstandselement 34 angebracht, das einen Reaktorkeller 35 nach oben hin begrenzt. Im Reaktorkeller 35 sind Zu- und Abfuhrkanäle 10 für die Verbrennungsmedien Luft L, Gas G und Abhitze A untergebracht. Sie sind an abziehende Heizzüge 4a und aufbrennende Heizzüge 4b angeschlossen (Fig. 2). Jeder einzelne Heizzug 4a, 4b, kann über Ventile 19 gesteuert bzw. geregelt werden. Es können aber auch mehrere Heizzüge 4a, 4b, gemeinsam gesteuert bzw. geregelt werden.

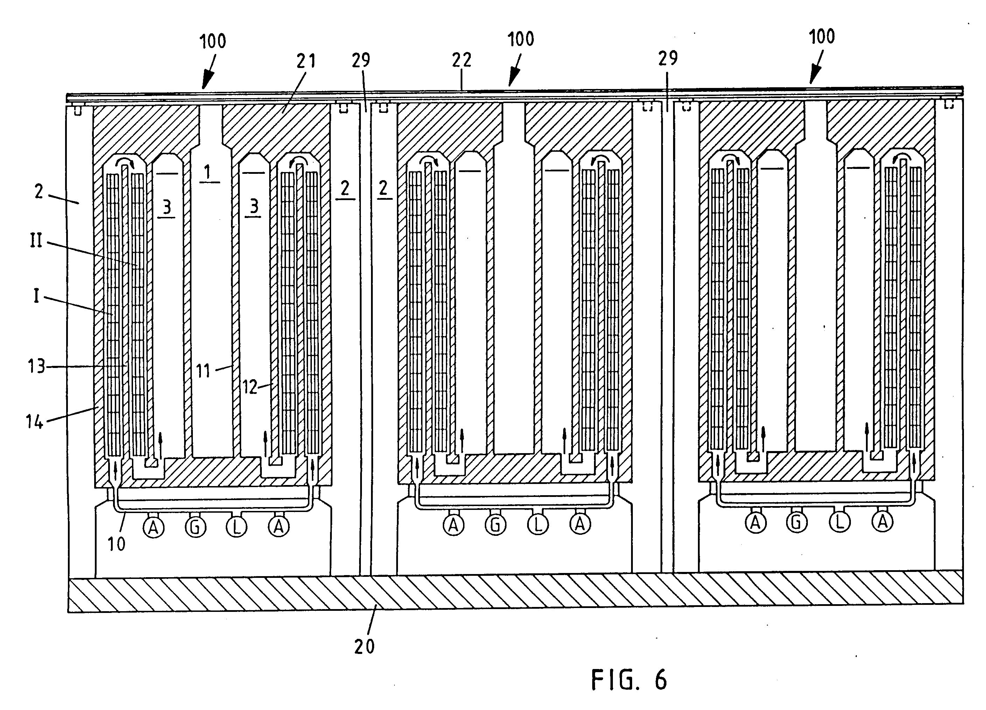

Zwischen den starren Seitenwänden 2 sind somit alle zur Beheizung einer Reaktorkammer 1 gehörigen Elemente angeordnet, so daß jede einzelne Reaktorkammer 1 unabhängig von der benachbarten betrieben werden kann, wenn mehrere Großraumverkokungsreaktoren 100 zu einem Reaktorblock (Fig. 6, 7, 8) zusammengefaßt sind. In der Figur 1 ist die Strömungsrichtung von Luft L bzw. Schwachgas G über die Zuführungskanäle 10 durch die Regeneratoren I und II und über eine Umkehrstelle 15 zum unteren Ende eines aufbrennenden Heizzuges 4b (Fig. 2) dargestellt. Der in Fig. 1 nicht gezeichnete Abzug der Abhitze A aus einem abziehenden Heizzug 4a (Fig. 2) erfolgt in umgekehrter Richtung über die Umkehrstelle 15 und die Regeneratoren I und II zu den Abführungskanälen 10 für Abhitze A.

In der Figur 2 ist die linke Hälfte des Großraumverkokungsreaktors 100 der Figur 1 im waagerechten Teilschnitt auszugsweise dargestellt, wobei insbesondere die Querverbindungen von der Läuferwand 11 über eine Hohlbinderwand 5 oder eine Vollbinderwand 6, die Trennwand 12, eine Querwand 7 und die Wand 14 mit Isolierschicht bis zur starren Seitenwand 2 ersichtlich sind.

Weiterhin sind in der Figur 2 in den Hohlbinderwänden 5 die Kanäle A, L und in den Heizzügen 4a, 4b, die Austrittsöffnungen A, L, G für die höhengestufte Zuführung von Luft L bzw. Schwachgas G und die Abführung der Abhitze A dargestellt. Mit Pfeilen 8 ist dabei die Umkehrung der Strömungsrichtung in Kammerlängsrichtung von den aufbrennenden Heizzügen 4b zu den abziehenden Heizzügen 4a angedeutet. Die Umkehrung der Strömungsrichtung an der oberen Umkehrstelle (Fig. 1) vom auf- zum abziehenden Regenerator (R), die durch die Längswand 13 getrennt sind, ist durch Pfeile 9 verdeutlicht.

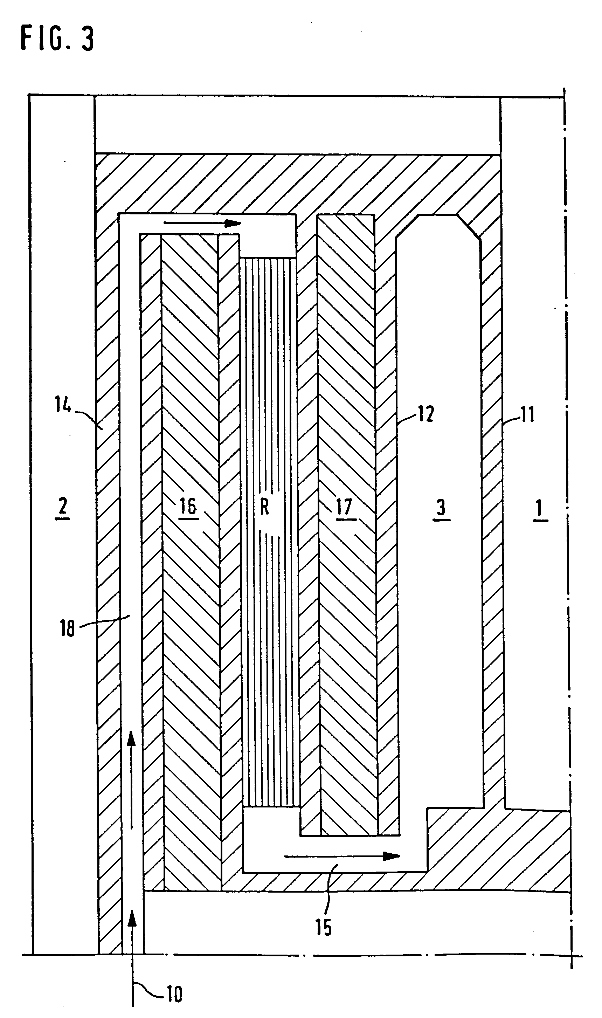

In der Figur 3 ist eine Ausführungsform mit einem einzügigen Regenerator (R) bzw. Rekuperator dargestellt, wobei die Verbrennungsmedien über einen zwischen der starren Seitenwand 2 und einer Wand mit Isolierschicht 16 angeordneten senkrechten Kanal 18, den einzügigen Regenerator (R) und die Umkehrstelle 15 zu- und abgeführt werden. Die Wände mit Isolierschichten 16 und 17 können über der Höhe der Reaktorkammer 1 aus Material unterschiedlicher Wärmeleitfähigkeit ausgeführt sein.

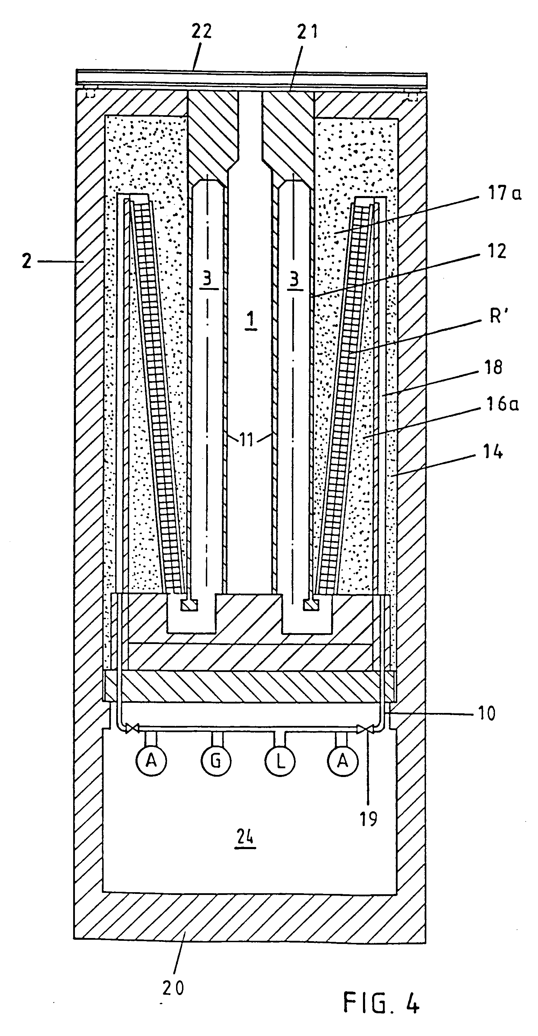

In der Figur 4 ist eine Ausgestaltung dargestellt, bei der im heißen, d. h. im unteren Bereich des Regenerators (R') die Isolierschicht 16a dicker ausgebildet ist als die Isolierschicht 17a, während es im oberen Bereich des Regenerators (R') gerade umgekehrt ist. Das führt zu der dargestellten Schrägstellung des Regenerators (R'). Bei dieser Ausgestaltung sind außerdem die zwischen den Seitenwänden 2 angeordneten einzelnen Elemente in einer Bauweise ausgeführt, die einen einfachen Austausch der Einzelelemente erlaubt.

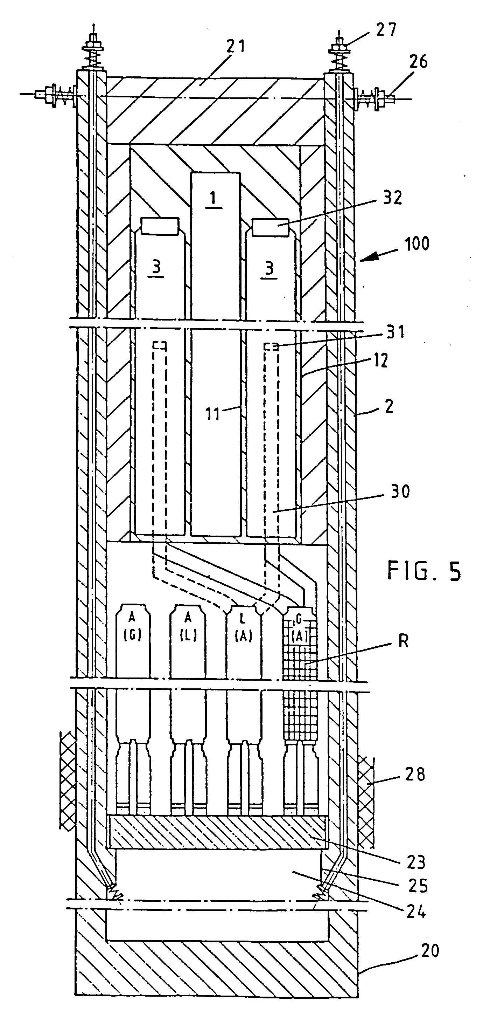

In der Figur 5 ist ein Großraumverkokungsreaktor 100 mit unterhalb der Reaktorkammer 1 liegendem Regenerator R abgebildet. Die starren Seitenwände 2 sind bei dieser Ausgestaltung über horizontal in der Reaktordecke 21 angeordnete federbelastete Längsanker 26 miteinander verbunden. Die starren Seitenwände 2 sind weiterhin in senkrechter Richtung mit gekühlten Spannankern 27 versehen.

Der unten liegende Regenerator (R) stützt sich auf eine oder mehrere Zwischenplatten 23 oberhalb eines Kellers 24 ab, welche ihrerseits auf Vorsprüngen 25 der Seitenwände 2 aufliegen.

Bei dem hier dargestellten Großraumverkokungsreaktor 100 können Heizwände 3, Regenerator (R) und der Reaktordecke 21, ausgenommen die Zwischenplatte 23, einen durchgehenden gemauerten Aufbau aufweisen. Einzelteile, beispielsweise Deckenelemente, Wandelemente oder Regenerator (R) können aber auch ganz oder teilweise aus vorgefertigten Feuerfestbetonteilen bestehen, die weitgehend selbständig austauschbar sind, um Reparaturarbeiten zu vereinfachen und zu beschleunigen. Die die Reaktorkammer 1 begrenzenden Flächen der Heizwände 3 verlaufen in Kammerlängsrichtung parallel zueinander.

Zur Vermeidung von zu großen Temperaturunterschieden in den starren Seitenwänden 2 kann außen eine Isolierschicht 28 angebracht sein. Die Verbrennungsmedien werden von den Regeneratoren R über Hohlbinderkanäle 30 und höhengestufte Austrittsschlitze, von denen nur der obere Austrittsschlitz 31 dargestellt ist, der Heizwand 3 zugeführt. Die Verbrennungsabgase werden über eine obere Umkehrstelle 32 und dann in umgekehrter Richtung durch die Heizzüge und die Hohlbinderkanäle 30 zu den Regeneratoren (R) abgeführt.

In der Figur 6 sind beispielhaft drei einzelne Großraumverkokungsreaktoren 100, wie sie in der Figur 1 dargestellt sind, zu einem Reaktorblock zusammengefaßt. Zwischen zwei benachbarten starren Seitenwänden 2 befindet sich jeweils ein Kühlspalt 29. Da die Großraumverkokungsreaktoren 100 unabhängig voneinander betreibbar sind, können in einem Reaktorblock beliebig viele Reaktoren zusammengefaßt werden.

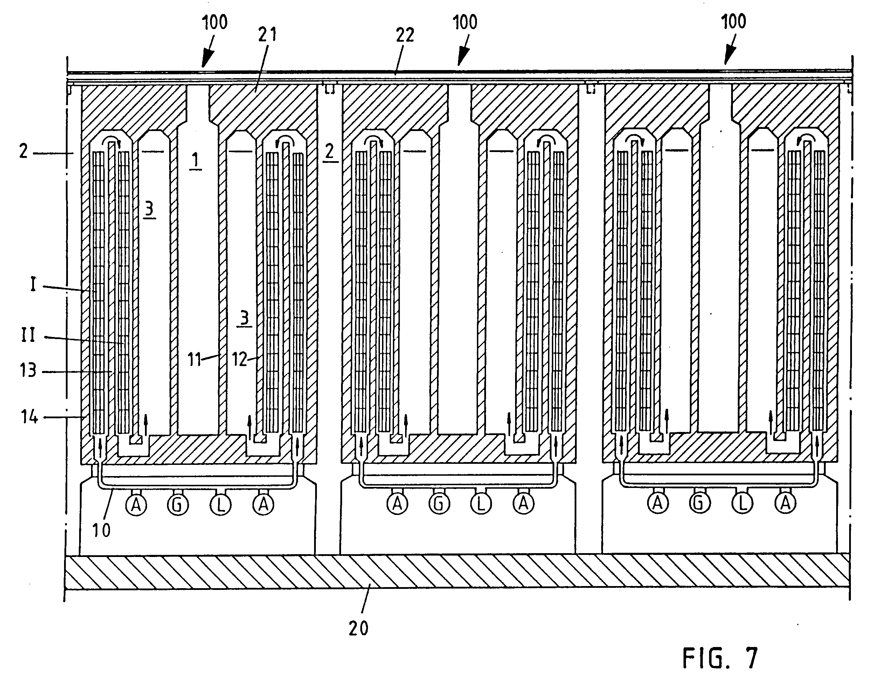

In der Figur 7 ist eine Reaktorblockausgestaltung abgebildet, bei der zwischen zwei benachbarten Großraumverkokungsreaktoren 100 der Gattung gemäß Figur 1 jeweils nur eine starre Seitenwand 2 angeordnet ist.

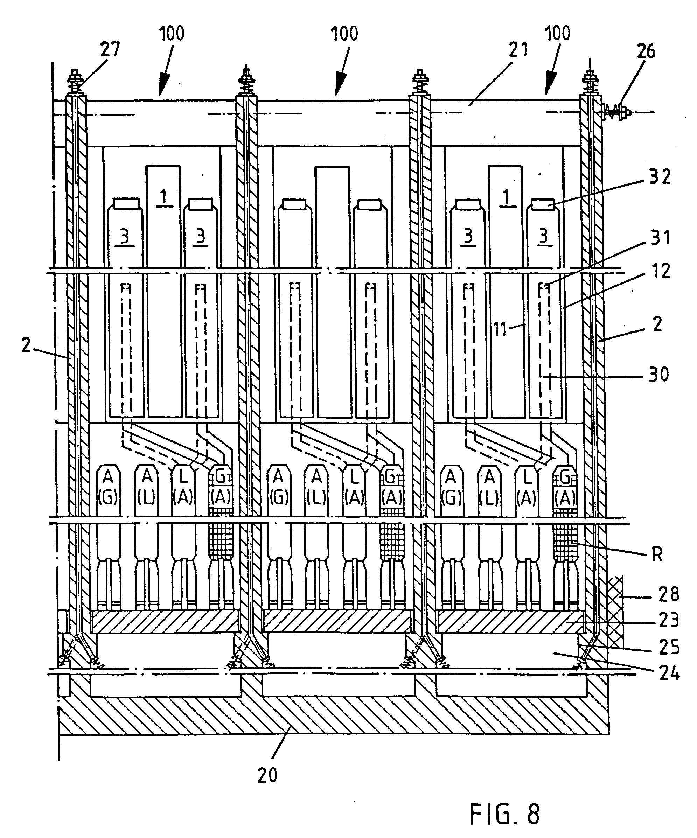

In Figur 8 sind mehrere Großraumverkokungsreaktoren 100 mit unter den Heizwänden 3 und der Reaktorkammer 1 angeordneten Regeneratoren (R) (entsprechend Fig. 5) zu einem Reaktorblock zusammengefaßt.

Dabei befindet sich, wie in der Figur 7, zwischen zwei benachbarten Großraumverkokungsreaktoren 100 nur jeweils eine starre Seitenwand 2, die in senkrechter Richtung mit gekühlten Spannankern 27 versehen sind. Die äußere starre Seitenwand 2 am Ende der Reaktorblockes ist mit einer Isolierschicht 28 versehen.

**BEZUGSZEICHENLISTE**

| | |
|---|---|
| 100 | Großraumverkokungsreaktor |
| 1 | Reaktorkammer |
| 2 | starre Seitenwand |
| 3 | Heizwände |
| 4a | Heizzug (abziehend) |
| 4b | Heizzug (aufbrennend) |
| 5 | Hohlbinderwand |
| 6 | Vollbinderwand |
| 7 | Querwand |
| 8 | Strömungsrichtungspfeil zwischen 4a und 4b |
| 9 | Strömungsrichtungspfeil zwischen I und II |
| 10 | Zu- und Abführungskanäle für A, L, G |
| 11 | Läuferwand |
| 12 | Trennwand |
| 13 | Längswand |
| 14 | Wand mit Isolierschicht |
| 15 | Umkehrstelle |
| 16, 16a | Wand mit Isolierschicht |

| 17, 17a | Wand mit Isolierschicht |
|---|---|
| 18 | senkrechter Kanal |
| 19 | Ventile |
| 20 | Grundplatte |
| 21 | Reaktordecke |
| 22 | Abstandselemente |
| 23 | Zwischenplatte |
| 24 | Keller |
| 25 | Vorsprünge |
| 26 | federbelastete Längsanker |
| 27 | gekühlte Spannanker |
| 28 | Isolierschicht |
| 29 | Kühlspalt |
| 30 | Hohlbinderkanäle |
| 31 | oberer Austrittsschlitz |
| 32 | obere Umkehrstelle |
| 33 | Reaktorboden |
| 34 | Abstandselement |
| 35 | Reaktorkeller |
| I | Regenerator nahe 2 |
| II | Regenerator nahe 3 |
| R, R′ | Regenerator oder Rekuperator |
| L | Luft |
| G | Schwachgas |
| A | Abhitze |

**Patentansprüche**

1. Verkokungsreaktor, dem Einsatzmischungen, vorzugsweise auf Basis von Steinkohle, chargenweise aufgegeben werden, wobei der Reaktor durch regelbare Beheizungseinrichtungen über beiderseits die Reaktorkammer begrenzende Heizwände indirekt mit Wärmerückgewinnung in Regeneratoren oder Rekuperatoren beheizt wird, dadurch gekennzeichnet, daß

    a) der Reaktor als Großraumverkokungsreaktor mit einer Reaktorkammer (1), Heizwänden (3) und Beheizungseinrichtungen (10, 19, R, I, II) ausgebildet ist, wobei die Reaktorkammer (1) eine Breite von mindestens 0,7 m und eine Nutzhöhe von mindestens 8,5 m sowie eine Nutzlänge von mindestens 18 m aufweist;

    b) die die Reaktorkammer (1) begrenzenden Heizwände (3) planparallel angeordnet sind;

    c) die Reaktorkammer (1) mit ihren Heizwänden (3) zwischen mindestens zwei starren Seitenwänden (2) angeordnet ist, wobei die Heizwände (3) starr gegen die Seitenwände (2) abgestützt sind;

    d) jede der Heizwände (3) eine der Reaktorkammer (1) zugekehrte Läuferwand (11) und eine der starren Seitenwand (2) zugekehrte Trennwand (12) sowie dazwischen senkrecht angeordnete Heizzüge aufweist; und

    e) den beiden Heizwänden (3) alle Einrichtungen (10, R, I, II) sowie den Heizzügen separate Steuer- und/oder Regelelementen (19) zur eigenständigen Beheizung der Reaktorkammer (1) zugeordnet sind.

2. Großraumverkokungsreaktor nach Anspruch 1, dadurch gekennzeichnet, daß die Regeneratoren (R) oder Rekuperatoren zwischen den Heizwänden (3) und den starren Seitenwänden (2) angeordnet sind.

3. Großraumverkokungsreaktor nach Anspruch 1 und 2, dadurch gekennzeichnet, daß die starren Seitenwände (2) des Reaktors im Deckenbereich über Abstandselemente (22) und Längsanker (26) starr miteinander verbunden sind.

4. Großraumverkokungsreaktor nach einem oder mehreren der Ansprüche 1 bis 3, dadurch gekennzeichnet, daß die starren Seitenwände (2) des Reaktors mit gekühlten Spannankern (27) versehen sind.

5. Großraumverkokungsreaktor nach einem oder mehreren der Ansprüche 1 bis 4, dadurch gekennzeichnet, daß die Dicke der Läuferwände (11) auf bis zu 50 mm verringert ist.

6. Großraumverkokungsreaktor nach einem oder mehreren der Ansprüche 1 bis 5, dadurch gekennzeichnet, daß die starren Seitenwände (2) des Reaktors formschlüssig mit einer Grundplatte (20) verbunden sind.

7. Großraumverkokungsreaktor nach einem oder mehreren der Ansprüche 1 bis 6, dadurch gekennzeichnet, daß sich zur Übertragung der Kräfte von der Reaktorkammer (1) auf die starren Seitenwände (2) des Reaktors Querwände (7) an die Binderwände (5, 6) anschließen, zwischen denen in Kammerlängsrichtung die Regeneratoren (R, I, II) bzw. Rekuperatoren angeordnet sind.

8. Großraumverkokungsreaktor nach einem oder mehreren der Ansprüche 1 bis 7, dadurch gekennzeichnet, daß zwischen starrer Seitenwand (2) und Heizwand (3) des Reaktors jeweils zwei Regeneratoren (R, I, II) mit in entgegengesetzter Richtung strömenden Medien angeordnet sind, die durch eine in Kammerlängsrichtung verlaufenden Längswand (13) voneinander getrennt sind und über eine obere oder untere Umkehrstelle (15) miteinander in Verbindung stehen (Figuren 2, 6, 7).

9. Großraumverkokungsreaktor nach einem oder mehreren der Ansprüche 1 bis 7, dadurch gekennzeichnet, daß zwischen starrer Seitenwand (2) und Heizwand (3) des Reaktors (100) jeweils nur ein Regenerator (R, II) und in der Nähe der starren Seitenwand (2) des Reaktors ein senkrechter Kanal (18) ohne Wärmeaustauschmaterial angeordnet sind (Figuren 3, 4).

10. Großraumverkokungsreaktor nach einem oder mehreren der Ansprüche 1 bis 9, dadurch gekennzeichnet, daß eine Isolierschicht (17a) zwischen Regenerator (R') und der Heizwand (3) des Reaktors im kalten Bereiche (oben) des Regenerators (R') dicker bzw. weniger wärmeleitend ist als im warmen Bereich (unten) und daß eine Isolierschicht (16a) zwischen dem Kanal (18) und dem Regenerator (R') im warmen Bereich (unten) dicker bzw. weniger wärmeleitend ist als im kalten Bereich (oben) des Regenerators (R') (Figur 4).

11. Großraumverkokungsreaktor nach einem oder mehreren der Ansprüche 1 bis 10, dadurch gekennzeichnet, daß dieser und/ oder dessen Teile und/oder die starren Seitenwände (2) und/ oder Teile der starren Seitenwände (2) aus großformatigen oder vorgefertigten großvolumigen Teilen bestehen.

12. Großraumverkokungsreaktor nach Anspruch 11, dadurch gekennzeichnet, daß die großformatigen oder vorgefertigten großvolumigen Teile aus Feuerfestbeston bestehen.

13. Großraumverkokungsreaktor nach einem oder mehreren der Ansprüche 1 bis 12, dadurch gekennzeichnet, daß die Heizzüge der Heizwände (3) in an sich bekannter Weise nach Art des Zwillingszug-, Vierzug- oder halbgeteilten Beheizungssystems ausgebildet sind, wobei jeder der beiden Heiz wände (3) einer Reaktorkammer (1) eigene, getrennt beaufschlagbare Regeneratoren (R) für Luft, Schwachgas und Abgas zugeordnet sind.

14. Großraumverkokungsreaktor nach einem oder mehreren der vorhergehenden Ansprüche, dadurch gekennzeichnet, daß die Regeneratoren (R) oder Rekuperatoren unterhalb der Heizwände (3) und/oder der Reaktorkammer (1) angeordnet sind (Figuren 5, 8).

15. Anlage mit Großraumverkokungsreaktoren nach einem oder mehreren der Ansprüche 1 bis 14, dadurch gekennzeichnet, daß mehrere Großraumverkokungsreaktoren (100) zu einem Reaktorblock zusammengefaßt sind, wobei diese Großraumverkokungsreaktoren (100) als einzelne Modulen ausgebildet sind, die jeweils unabhängig von Nachbarmodulen betreibbar und gegebenenfalls auswechselbar sind (Figuren 6, 7, 8).

16. Anlage nach Anspruch 15, dadurch gekennzeichnet, daß nur jeweils eine starre Seitenwand (2) zwischen zwei benachbarten Großraumverkokungsreaktoren (100) angeordnet ist (Figur 7).

## Claims

1. Coking reactor, to which charge mixtures, preferably based on hard coal, are delivered batchwise, the reactor being heated, indirectly with heat recovery to regenerators or recuperators, by regulable heating apparatus by way of heating walls delimiting the reactor chamber on both sides, characterized in that
   a) the reactor is constructed as a large-capacity coking reactor having a reactor chamber (1), heating walls (3) and heating apparatus (10, 19, R, I, II), the reactor chamber (1) having a width of at least 0.7 m and a working height of at least 8.5 m as well as a working length of at least 18 m;
   b) the heating walls (3) delimiting the reactor chamber (1) are arranged plane-parallel;
   c) the reactor chamber (1) is arranged with its heating walls (3) between at least two rigid side walls (2), the heating walls (3) being supported rigidly against the side walls (2);
   d) each of the heating walls (3) has a runner wall (11) facing the reactor chamber (1) and a separating wall (12) facing the rigid side wall (2), and heating flues arranged vertically therebetween; and
   e) all the apparatus (10, R, I, II) are associated with the two heating walls (3) and separate control and/or regulating elements (19) are associated with the heating flues for independent heating of the reactor chamber (1).

2. Large-capacity coking reactor according to Claim 1, characterized in that the regenerators (R) or recuperators are arranged between the heating walls (3) and the rigid side walls (2).

3. Large-capacity coking reactor according to Claims 1 and 2, characterized in that the rigid side walls (2) of the reactor are rigidly connected to one another in the ceiling region by way of spacer elements (22) and longitudinal ties (26).

4. Large-capacity coking reactor according to one or more of Claims 1 to 3, characterized in that the rigid side walls (2) of the reactor are provided with cooled tension ties (27).

5. Large-capacity coking reactor according to one or more of Claims 1 to 4, characterized in that the thickness of the runner walls (11) is reduced by up to 50 mm.

6. Large-capacity coking reactor according to one or more of Claims 1 to 5, characterized in that the rigid side walls (2) of the reactor are connected with form fit to a base plate (20).

7. Large-capacity coking reactor according to one or more of Claims 1 to 6, characterized in that for transmitting forces from the reactor chamber (1) to the rigid side walls (2) of the reactor transverse walls (7) adjoin the binder walls (5, 6), between which the regenerators (R, I, II) or recuperators are arranged in the longitudinal direction of the chamber.

8. Large-capacity coking reactor according to one or more of Claims 1 to 7, characterized in that between the rigid side wall (2) and the heating wall (3) of the reactor there are arranged in each case two regenerators (R, I, II) with media flowing in opposing directions, and these are separated from one another by a longitudinal wall (13) running in the longitudinal direction of the chamber and are connected to one another by way of an upper or lower reversal point (15) (Figures 2, 6, 7).

9. Large-capacity coking reactor according to one or more of Claims 1 to 7, characterized in that there are arranged between the rigid side wall (2) and heating wall (3) of the reactor (100) in each case only one regenerator (R, II) and in the vicinity of the rigid side wall (2) of the reactor a vertical channel (18) without heat exchange material (Figures 3, 4).

10. Large-capacity coking reactor according to one or more of Claims 1 to 9, characterized in that an insulating layer (17a) between the regenerator (R') and the heating wall (3) of the reactor is thicker or less heat-conductive in the cold region (at the top) of the regenerator (R') than in the warm region (at the bottom), and in that an insulating layer (16a) between the channel (18) and the regenerator (R') is thicker or less heat-conductive in the warm region (at the bottom) than in the cold region (at the top) of the regenerator (R') (Figure 4).

11. Large-capacity coking reactor according to one or more of Claims 1 to 10, characterized in that the latter and/or its parts and/or the rigid side walls (2) and/or parts of the rigid side walls (2) are made of large-format or prefabricated large-volume parts.

12. Large-capacity coking reactor according to Claim 11, characterized in that the large-format or prefabricated large-volume parts are made of refractory concrete.

13. Large-capacity coking reactor according to one or more of Claims 1 to 12, characterized in that the heating flues of the heating walls (3) are constructed in a manner known per se in the manner of a twin-flue, four-flue or half-split heating system, separate regenerators (R), which may be acted upon separately, for air, weak gas and off gas being associated with each of the two heating walls (3) of a reactor chamber (1).

14. Large-capacity coking reactor according to one or more of the preceding claims, characterized in that the regenerators (R) or recuperators are arranged below the heating walls (3) and/or the reactor chamber (1) (Figures 5, 8).

15. Plant having large-capacity coking reactors according to one or more of Claims 1 to 14, characterized in that a plurality of large-volume coking reactors (100) are grouped together to form a reactor block, these large-capacity coking reactors (100) being constructed as individual modules which may each be operated independently of adjacent modules and are in some cases exchangeable (Figures 6, 7, 8).

16. Plant according to Claim 15, characterized in that in each case only one rigid side wall (2) is arranged between two adjacent large-capacity coking reactors (100) (Figure 7).

**Revendications**

1. Réacteur de cokéfaction dans lequel des mélanges à traiter, de préférence à base de charbon, sont introduits en discontinu, le réacteur étant chauffé indirectement avec récupération de chaleur dans des régénérateurs ou récupérateurs, par des installations réglables de chauffage, à travers les parois chauffantes limitant la chambre du réacteur sur ses deux côtes, **caractérisé en ce que:**

    a) Le réacteur se présente sous la forme d'un réacteur de cokéfaction à grande capacité, avec une chambre (1) de réacteur, des parois chauffantes (3) et des installations de chauffage (10, 19, R, I, II), la chambre (1) du réacteur présentant une largeur de 0,7 m au moins et une hauteur utile de 8,5 m au moins, ainsi qu'une longueur utile de 18 m au moins;

b) les parois chauffantes (3) limitant la chambre (1) du réacteur sont agencées suivant des plans parallèles;

c) la chambre (1) du réacteur, avec ses parois chauffantes (3), est disposée entre au moins deux parois latérales (2) rigides, les parois chauffantes (3) étant soutenues rigidement contre les parois latérales (2);

d) chacune des parois chauffantes (3) présente une paroi de refend (11) et une paroi de séparation (12) faisant face a une des parois latérales (2) rigides, ainsi que des carneaux de chauffage disposés perpendiculairement entre cette paroi de refend (11) et cette paroi de séparation (12): et

e) en vue d'un chauffage autonome de la chambre (1) du reacteur, aux deux parois chauffantes (3) sont conjuguees toutes les installations (10, R, I, II), et aux carneaux de chauffage sont conjugués des éléments (19) de commande et/ou de régulation.

2. Réacteur de cokéfaction a grande capacité selon la revendication 1, **caractérisé en ce que** les régénérateurs (R) ou récupérateurs sont disposés entre les parois chauffantes (3) et les parois latérales (2).

3. Réacteur de cokéfaction à grande capacité selon la revendication 1 ou 2, **caractérisé en ce que** les parois latérales (2) rigides du réacteur sont reliées rigidement entre elles au voisinage du toit, par l'intermédiaire d'éléments d'écartement (22) et d'ancrages longitudinaux (26).

4. Réacteur de cokéfaction à grande capacité selon l'une ou plusieurs des revendications 1 à 3, **caractérisé en ce que** les parois latérales (2) rigides du réacteur sont dotées d'ancrages sous tension (27) refroidis.

5. Réacteur de cokéfaction à grande capacité selon l'une ou plusieurs des revendications 1 à 4, **caractérisé en ce que** l'épaisseur de la paroi de refend (11) est réduite à 50 mm.

6. Réacteur de cokéfaction à grande capacité selon l'une ou plusieurs des revendications 1 à 5, **caractérisé en ce que** les parois latérales (2) rigides du réacteur sont reliées à engagement positif par un socle (20).

7. Réacteur de cokéfaction à grande capacité selon l'une ou plusieurs des revendications 1 à 6, **caractérisé en ce qu'**en vue du transfert des forces de la chambre (1) du réacteur aux parois latérales (2) rigides du réacteur, des parois transversales (7) se raccordent aux parois de liaison (5, 6) entre lesquelles, dans la direction longitudinale de la chambre, sont disposés les régénérateurs (R, I, II) ou récupérateurs.

8. Réacteur de cokéfaction à grande capacité selon l'une ou plusieurs des revendications 1 à 7, **caractérisé en ce qu'**entre chaque paroi latérale rigide (2) et chaque paroi chauffante (3) du réacteur sont disposés deux régénérateurs (R, I, II) à agents s'écoulant dans des directions opposées, et qui sont mutuellement séparés par une paroi longitudinale (13) s'étendant dans le sens de la longueur de la chambre et mutuellement reliés par l'intermédiaire d'un emplacement de déviation (15) supérieur ou inférieur (figures 2, 6, 7).

9. Réacteur de cokéfaction à grande capacité selon l'une ou plusieurs des revendications 1 à 7, **caractérisé en ce qu'**entre chaque paroi latérale rigide (2) et chaque paroi chauffante (3) du réacteur (100) sont disposés un seul régénérateur (R, II) et, à proximité de la paroi latérale rigide (2) du réacteur, un canal (18) perpendiculaire sans matériau d'échange thermique (figures 3, 4).

10. Réacteur de cokéfaction à grande capacité selon l'une ou plusieurs des revendications 1 à 9, **caractérisé en ce qu'**entre le régénérateur (R') et la paroi chauffante (3) du réacteur, dans la partie froide (supérieure) du régénérateur (R'), une couche isolante (17a) est plus epaisse ou moins conductrice de la chaleur que dans la partie chaude (inférieure), et **en ce qu'**entre le canal (18) et le régénérateur (R'), dans la partie chaude (inférieure), une couche isolante (16a) est plus épaisse ou moins conductrice de la chaleur que dans la partie froide (supérieure) du régénérateur (R') (figure 4).

11. Réacteur de cokéfaction à grande capacité selon l'une ou plusieurs des revendications 1 à 10, **caractérisé en ce que** celui-ci et/ou ses parties et/ou les parois latérales (2) rigides et/ou des parties des parois latérales (2) rigides sont constituées de pièces de grand format ou préfabriquées de grand volume.

12. Réacteur de cokéfaction à grande capacité selon la revendication 11, **caractérisé en ce**

**que** les pièces de grand format ou préfabriquées de grand volume sont constituées de béton résistant au feu.

13. Réacteur de cokéfaction à grande capacité selon l'une ou plusieurs des revendications 1 à 12, **caractérisé en ce que** les carneaux de chauffage des parois chauffantes (3) se présentent de manière en soi connue de la technique sous la forme d'un système de chauffage à carneaux doubles, à carneaux quadruples ou partagé en deux, tandis qu'à chacune des deux parois chauffantes (3) d'une chambre (1) du réacteur sont conjugués leurs propres régénérateurs (R), alimentés séparément, pour l'eau, le gaz pauvre et le gaz extrait.

14. Réacteur de cokéfaction à grande capacité selon l'une ou plusieurs des revendications précédentes, **caractérisé en ce que** les régénérateurs (R) ou recupérateurs sont disposes endessous des parois chauffantes (3) et/ou de la chambre (1) du réacteur (figures (5, 8).

15. Installation de réacteurs de cokéfaction à grande capacité selon l'une ou plusieurs des revendications 1 à 14, **caractérisée en ce que** plusieurs réacteurs de cokéfaction à grande capacité (100) sont rassemblés en un bloc de réacteurs, ces réacteurs de cokéfaction à grande capacité se présentant sous la forme de modules individuels pouvant chacun être exploité independamment des modules voisins, et pouvant le cas échéant être débranché (figures 6, 7. 8).

16. Installation selon la revendication 15, **caractérisée en ce qu'**entre deux réacteurs de cokéfaction à grande capacité (100) voisins est disposée une seule paroi latérale (2) rigide (figure 7).

FIG. 1

# FIG. 2

# FIG. 3

FIG. 4

FIG. 5

FIG. 6

FIG. 7

EP 0 275 514 B1

FIG. 8